(19)

Europäisches Patentamt

European Patent Office

Office européen des brevets

(11) **EP 2 845 639 A1**

(12) **EUROPEAN PATENT APPLICATION**

(43) Date of publication:
**11.03.2015 Bulletin 2015/11**

(51) Int Cl.:
***B01D 53/08*** *(2006.01)*     ***B01D 53/62*** *(2006.01)*
***B01D 53/83*** *(2006.01)*

(21) Application number: **13182928.5**

(22) Date of filing: **04.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALSTOM Technology Ltd**
**5400 Baden (CH)**

(72) Inventors:
• **Balfe, Michael Charles**
  **55131 Mainz (DE)**
• **Stallmann, Olaf**
  **55270 Essenheim (DE)**
• **Weingaertner, Christoph**
  **55435 Gau-Algesheim (DE)**

(54) **CO2 capture system and retrofit method**

(57) The $CO_2$ capture system for flue gas comprises a Carbonator (3) and a Calciner (5). At the Carbonator (3) $CO_2$ contained in the flue gas reacts with CaO from the Calciner (5) producing $CaCO_3$. At the Calciner (5) heat is provided to the $CaCO_3$ producing CaO and $CO_2$. The Calciner (5) is connected to a burner (8) that is arranged for indirectly heating the Calciner (5). The burner (8) is connected to a fuel supply (10) and an oxidizer supply (11). The oxidizer supply (11) is arranged for providing substantially pure oxygen or both air and substantially pure oxygen.

Fig. 2

EP 2 845 639 A1

**Description**

TECHNICAL FIELD

The present disclosure relates to $CO_2$ capture system and a retrofit method. For example the $CO_2$ capture system and the retrofit method can be implemented to capture $CO_2$ from flue gas generated by the combustion of carbonaceous fuels for power generation or to drive energy intensive industrial and chemical processes such as cement or steel production.

BACKGROUND

In order to capture $CO_2$ from flue gas generated in power plants or industrial processes, $CO_2$ capture systems using Calciner and Carbonator reactors are known.

In these systems, the flue gas containing $CO_2$ is supplied to a Circulating Fluidized Bed (CFB) reactor, the Carbonator, where the gaseous $CO_2$ reacts with solid sorbent, mainly CaO (lime), forming solid $CaCO_3$ (limestone); this reaction occurs readily at high temperatures (600 - 700°C). Solid $CaCO_3$ is subsequently supplied to a Calciner where the $CaCO_3$ from the sorbent is thermally decomposed into $CO_2$ and CaO; gaseous $CO_2$ is easily separated from the solid sorbent and is returned to the Carbonator for renewed capture of $CO_2$ from Flue Gas; the thermal decomposition occurs at above 900°C in a near pure $CO_2$ environment.

The reaction at the Calciner is endothermic and heat is required at high temperatures. Heat can be supplied via direct or indirect methods; Direct methods expose the sorbent to the hot combustion gas (characteristically from an oxy-combustion process) generated externally or via in situ oxy-combustion of carbonaceous fuels; Indirect methods separate the sorbent from the combustion environment (characteristically air fired) by a heat transfer surface or by using a heating transport medium to allow air fired combustion and avoid contamination of the $CO_2$ product stream.

Calciner reactors with indirect air-fired heating (where heat is transfer over walls or via transport media) to drive the endothermic calcination reactions are also known. In such a system air includes oxygen, nitrogen and a lower amount of other gas. Oxygen takes part in the combustion process with the fuel, whereas the bulk rest does not react but is heated during the combustion process. The unreactive bulk moderates the combustion temperature though sensible heating; and thus the maximum achievable temperature is limited, as is the driving force for the heat exchange. In addition, due to a required temperature difference between the hot combustion gas and the cold air feed the sensible heat losses limit the availability for heat transfer above 900°C. As a result the current methods provide little retrofit capacity (capacity to capture $CO_2$ from flue gas (generated externally) from existing processes, power generation or industrial chemical and are associated with large and expensive heat transfer surfaces.

SUMMARY

An aspect of the disclosure includes providing a $CO_2$ capture system and a retrofit method by which the problems of the prior art can be counteracted.

The potential for reducing the fuel consumption for an indirect heated calcination scheme is determined by the mass flow of inert gas contained in the gas used to oxidize the fuel (oxidation gas) and the temperature difference between the maximum temperature achievable through preheating and the required calcination temperature (900°C plus temperature difference to ensure driving force).

```
Q firing reduction = reduction in mass flow of inert gas * specific heat capacity of inert gas * (required calcination

temperature - max achievable preheat temperature)
```

The disclosure provides a $CO_2$ capture system better suited for retrofit applications by reducing the mass flow of inert gas contained in the oxidation gas required for combustion to provide heat to drive the calcination, less inert gas lead to a decrease in fuel demand associated with the capture process (with a given approach temperature) and thus increased energy availability for external $CO_2$ capture. The application of oxy-aided combustion increases the combustion temperatures reducing the required heat transfer surface by increasing thermal driving forces.

In addition, the combination of an oxy-aided air fired system with an inert heat transport medium such as sand (or some other heat stable solid) can reduce the approach temperature required for heat transfer and in turn increase the heat availability for the calcination reaction above that achievable with heat transfer surfaces.

This and further aspects are attained by providing a $CO_2$ capture system and a retrofit method in accordance with the accompanying claims.

BRIEF DESCRIPTION OF THE DRAWINGS

Further characteristics and advantages will be more apparent from the description of a preferred but non-exclusive embodiment of the $CO_2$ capture system and method, illustrated by way of a non-limiting example in the accompanying drawings, in which:

Figure 1 is a schematic view of the $CO_2$ capture system in a first embodiment;
Figure 2 is a schematic view of the $CO_2$ capture system in a second embodiment;
Figure 3 and 4 show different embodiments of oxidizer supply to the burner.

DETAILED DESCRIPTION OF EXEMPLARY EMBODIMENTS

With reference to the figures, these show a boiler of a power plant or an industrial chemical process 1, which generates flue gas containing $CO_2$ that must be captured. The boiler 1 is connected to a $CO_2$ capture system comprising a Carbonator 3 and a Calciner 5.

At the Carbonator 3 $CO_2$ contained in the flue gas reacts with sorbent (containing CaO) from the Calciner producing $CaCO_3$; this reaction occurs between 600°C and 700°C, preferably around 650°C.

At the Calciner 5 heat is provided to the $CaCO_3$ to decompose it back to CaO and $CO_2$; this reaction occurs at above 900°C in a pure $CO_2$ environment at close to atmospheric pressure.

The Calciner 5 is connected to a burner 8 that is arranged for indirectly heating the Calciner 5. A heat transfer surface is used to separate the hot gas from the reacting sorbent.

The burner 8 is connected to a carbonaceous fuel supply 10 (for example gas fuel, oil, coal, etc) and an oxidizer supply 11.

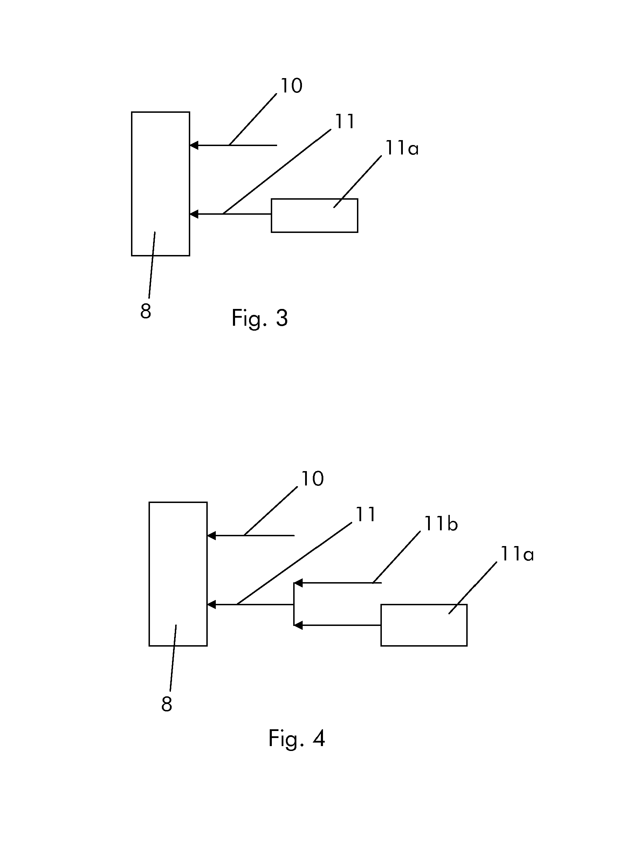

In a first example, the oxidizer supply 11 provides substantially pure oxygen (figure 3).

For example the oxidizer supply 11 can be connected to an air separating unit 11a (ASU). In other examples the oxidizer supply 11 can be connected to tanks or bottles containing oxygen, etc.

In a second example, the oxidizer supply 11 provides air and substantially pure oxygen at the same time (figure 4). For example the oxidizer supply 11 can provide a mixture of air and substantially pure oxygen or air and substantially pure oxygen can be separately supplied into the burner 8 at the same time.

For example (figure 4), the oxidizer supply 11 can be connected to an air separating unit 11a and to an air supply 11b; air and oxygen are mixed and supplied to the oxidizer supply 11.

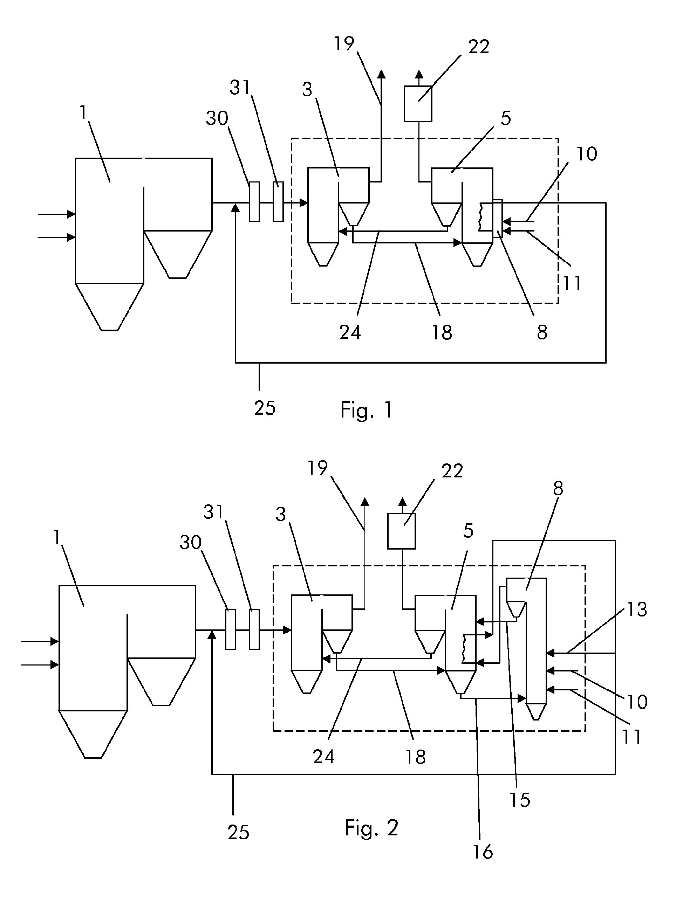

In a first example the burner 8 may be embedded from the Calciner 5 (figure 1).

In a second example, the burner 8 is a separate component from the Calciner 5 and the burner 8 supplies hot combustion gas or solid particles or both to the Calciner 5 (figure 2).

In both cases, the burner 8 can have a recirculation line 13 to recirculate part of the hot gas generated therein from the outlet of the burner 8 back into the burner 8.

In the second example, line 15 supplies solid particles from the burner 8 to the Calciner 5, where the solid particles are cooled and drive the endothermic calcination reaction; a second line 16 is provided to return the cooled solid particles from the Calciner 5 to the burner 8 where the solid particles are reheated.

The solid particles generated in the burner 8 can be held separate from the process, as is the hot gas in the first example, or the properties of the solid particles can be selected to facilitate mixture with and subsequent separation from the solid capture sorbent. In this manner the heat transfer surface is replaced by the circulating solids stream through the burner 8.

Upstream of the Carbonator 3 there are also preferably provided a desulphurization unit 30, like for example a $SO_x$ scrubber, and a de-dusting unit 31, like for example a filter or electrostatic precipitator. Advantageously possible solid material generated in the desulphurization unit 30 is removed at the de-dusting unit 31.

The operation of the $CO_2$ capture system is apparent from that described and illustrated and is substantially the following.

The boiler 1 or industrial process generates flue gas that passes through the desulphurization unit 30 and de-dusting unit 31 and then is supplied into the Carbonator 3.

At the Carbonator 3 the reaction $CaO + CO_2 \rightarrow CaCO_3$ at a temperature between 600 and 700°C, preferentially about 650°C occurs. The $CO_2$ is thus separated from the flue gas (to form the $CaCO_3$). The $CaCO_3$ is thus supplied into the Calciner 5 via line 18, and the flue gas deprived of the $CO_2$ is vented or supplied to other treatments via line 19.

At the Calciner 5 the reaction $CaCO_3 \rightarrow CaO + CO_2$ occurs at a temperature above 900°C in a close to pure $CO_2$ environment at near atmospheric pressure.

The heat to reach such a high temperature is supplied by the heat generated in the burner 8 and is subsequently transferred over a surface cooling the hot combustion gas or optionally via the direct contact of the sorbent with a solid particle stream (hot solids).

At the burner 8 fuel and either substantially pure oxygen or air or both air and substantially pure oxygen are supplied, thereby the amount of inert gas (like the nitrogen) is limited.

The temperature of the hot gas generated at the burner 8 increases with increasing oxygen content (higher than in the case of an air-fired burner 8), with a beneficial effect on the temperatures of the hot gas and thermal driving force to transfer heat to the Calciner 5 and a reduction in the required heat exchanging surface (less than in the case of an air-fired burner 8).

In addition, when air and substantially pure oxygen are supplied into the burner 8, the ratio air/substantially pure oxygen can be adjusted, in order to regulate the temperature of hot gas. The use of both air and substantially pure oxygen allows use of a smaller air separation unit or tanks or bottles than when only substantially pure oxygen is supplied into the burner 8; this allows a less expensive plant.

The $CO_2$ separated at the Calciner 5 is sent to $CO_2$ conditioning systems 22 (including for example heat recovery, etc.) and is than stored or used in a different way.

The CaO generated at the Calciner 5 is supplied to the Carbonator 3 via line 24.

The hot gas generated at the burner 8, after heating the Calciner 5, is supplied into the Carbonator 3 via line 25.

The present invention also refers to a method for retrofitting a $CO_2$ capture system for flue gas comprising a Carbonator 3 and a Calciner 5.

The Calciner 5 is connected to the burner 8 that is arranged for indirectly heating the Calciner 5 and is connected to the fuel supply 10 and an air supply.

The method includes removing the air supply from the burner 8 and providing the burner 8 with an oxidizer supply 11 arranged to supply substantially pure oxygen or air and substantially pure oxygen at the same time.

Preferably the burner 8 is a separate component from the Calciner 5 and is used to heat and supply solid particles (hot solids) to the Calciner 5 via line 15 and returning the solid particles (cooled solids) to the burner

8 via line 16 (figure 2).

Preferably also a recirculation line 13 for the burner 8 is provided, to recirculate part of the hot gases generated in the burner 8 from the outlet of the burner 8 back into the burner 8.

Naturally the features described may be independently provided from one another.

In practice the materials used and the dimensions can be chosen at will according to requirements and to the state of the art.

REFERENCE NUMBERS

**[0046]**

| | |
|---|---|
| 1 | boiler |
| 3 | Carbonator |
| 5 | Calciner |
| 8 | burner |
| 10 | fuel supply |
| 11 | oxidizer supply |
| 11a | air separating unit |
| 11b | air supply |
| 13 | recirculation line |
| 15 | first line |
| 16 | second line |

| 18 | line |
|---|---|
| 19 | line |
| 22 | $CO_2$ conditioning system |
| 24 | line |
| 25 | line |
| 30 | desulphurization unit |
| 31 | de-dusting unit |

**Claims**

1.  A $CO_2$ capture system for flue gas comprising a Carbonator (3) and a Calciner (5), wherein:

    at the Carbonator (3) $CO_2$ contained in the flue gas can react with CaO from the Calciner (5) producing $CaCO_3$,
    at the Calciner (5) heat can be provided to the $CaCO_3$ producing CaO and $CO_2$,
    the Calciner (5) is connected to a burner (8),
    the burner (8) is arranged for indirectly heating the Calciner (5),
    the burner (8) is connected to a fuel supply (10) and
    an oxidizer supply (11),
    **characterised in that**
    the oxidizer supply (11) is arranged for providing substantially pure oxygen or air and substantially pure oxygen at the same time.

2.  The system of claim 1, **characterised in that** the oxidizer supply (11) is connected to an air separating unit.

3.  The system of claim 1, **characterised in that** the burner (8) is embedded in the Calciner (5).

4.  The system of claim 1, **characterised in that** the burner (8) is a separate component from the Calciner (5) and the burner (8) supplies hot gas or solid particles or both to the Calciner (5).

5.  The system of claim 1, **characterised in that** the burner (8) has a recirculation line (13) to recirculate part of the hot gases generated therein from the outlet of the burner (8) back into the burner (8).

6.  The system of claim 1, **characterised by** comprising a first line (15) for supplying solid particles from the burner (8) to the Calciner (5).

7.  The system of claim 1, **characterised by** comprising a second line (16) for supplying solid particles from the Calciner (5) to the burner (8).

8.  A method for retrofitting a $CO_2$ capture system for flue gas comprising a Carbonator (3) and a Calciner (5), wherein:

    at the Carbonator (3) $CO_2$ contained in the flue gas can react with CaO from the Calciner (5) producing $CaCO_3$,
    at the Calciner (5) heat can be provided to the $CaCO_3$ producing CaO and $CO_2$,
    the Calciner (5) is connected to a burner (8),
    the burner (8) is arranged for indirectly heating the Calciner (5),
    the burner (8) is connected to a fuel supply (10) and
    an air supply,
    the method being **characterised by**
    removing the air supply from the burner (8),
    providing the burner (8) with an oxidizer supply (11) arranged to supply substantially pure oxygen or air and substantially pure oxygen at the same time.

9.  The method of claim 8, **characterised by** providing an air separating unit connected to the oxidizer supply (11).

10. The method of claim 8, **characterised by** providing a recirculation line (13) for the burner (8) to recirculate part of the hot gases generated in the burner (8) from the outlet of the burner (8) back into the burner (8).

Fig. 1

Fig. 2

Fig. 3

Fig. 4

Europäisches
Patentamt

European
Patent Office

Office européen
des brevets

## EUROPEAN SEARCH REPORT

Application Number

EP 13 18 2928

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 559 475 A1 (ALSTOM TECHNOLOGY LTD [CH]) 20 February 2013 (2013-02-20) | 1-4,8,9 | INV. B01D53/08 B01D53/62 B01D53/83 |
| Y | * paragraphs [0036], [0091]; figures 1-3 * | 5-7,10 | |
| Y | DE 37 38 301 A1 (PETERS AG CLAUDIUS [DE]) 24 May 1989 (1989-05-24) * figure 2 * | 5,10 | |
| Y | FR 2 921 059 A1 (RECH S GEOL ET MINIERES BRGM E [FR]; LAFARGE SA [FR] RECH S GEOL ET MI) 20 March 2009 (2009-03-20) | 7 | |
| A | * figures 2,3 * | 4 | |
| Y | EP 2 299 176 A1 (UNIV DARMSTADT TECH [DE]) 23 March 2011 (2011-03-23) * figures 1-3 * | 6,7 | |
| X | US 2006/093540 A1 (FAN LIANG-SHIH [US] ET AL) 4 May 2006 (2006-05-04) * paragraphs [0028], [0028], [0029], [0095]; figures 31,32,35,14 * | 1,2,4,8,9 | |
| Y | WO 2011/047409 A1 (CALIX LTD [AU]; SCEATS MARK GEOFFREY [AU]; DINSDALE JULIAN WESTLEY [AU] 28 April 2011 (2011-04-28) * page 18, line 22 - line 23; figure 2 * | 6,7 | TECHNICAL FIELDS SEARCHED (IPC) B01D |

The present search report has been drawn up for all claims

| Place of search | Date of completion of the search | Examiner |
|---|---|---|
| The Hague | 13 January 2014 | Bergt, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 18 2928

This annex lists the patent family members relating to the patent documents cited in  the above-mentioned European search report.
The members are as contained in the European Patent Office EDP file on
The European Patent Office is in no way liable for these particulars which are merely given for the purpose of information.

13-01-2014

| Patent document cited in search report | | Publication date | Patent family member(s) | | Publication date |
|---|---|---|---|---|---|
| EP 2559475 | A1 | 20-02-2013 | EP<br>TW<br>WO | 2559475 A1<br>201319473 A<br>2013024339 A1 | 20-02-2013<br>16-05-2013<br>21-02-2013 |
| DE 3738301 | A1 | 24-05-1989 | NONE | | |
| FR 2921059 | A1 | 20-03-2009 | NONE | | |
| EP 2299176 | A1 | 23-03-2011 | DE 102009039055 A1<br>EP 2299176 A1 | | 10-03-2011<br>23-03-2011 |
| US 2006093540 | A1 | 04-05-2006 | CA<br>EP<br>US<br>US<br>US<br>WO | 2626772 A1<br>1948349 A2<br>2006093540 A1<br>2008233029 A1<br>2013078159 A1<br>2007046815 A2 | 26-04-2007<br>30-07-2008<br>04-05-2006<br>25-09-2008<br>28-03-2013<br>26-04-2007 |
| WO 2011047409 | A1 | 28-04-2011 | AU<br>CA<br>CN<br>EP<br>US<br>WO | 2010310862 A1<br>2778179 A1<br>102665871 A<br>2490792 A1<br>2012267577 A1<br>2011047409 A1 | 07-06-2012<br>28-04-2011<br>12-09-2012<br>29-08-2012<br>25-10-2012<br>28-04-2011 |

EPO FORM P0459

For more details about this annex : see Official Journal of the European Patent Office, No. 12/82